# FASCICULE DE BREVET EUROPEEN

(11) **EP 4 594 181 B1**
(45) Date de publication et mention de la délivrance du brevet: **02.09.2026**
(21) Numéro de dépôt: 23790724.1
(22) Date de dépôt: 20.09.2023
(51) Int. Cl.: B64C 13/50, B64C 27/68, B64C 27/59, B64C 27/64, F16H 25/10

(54) **SYSTÈME DE TRANSMISSION DE COMMANDE À UNE PLURALITÉ DE SERVO-ACTIONNEURS HYDRAULIQUES**
SYSTEM ZUR BEFEHLSÜBERTRAGUNG AN MEHRERE HYDRAULISCHE STELLANTRIEBE
SYSTEM FOR TRANSMITTING COMMANDS TO A PLURALITY OF HYDRAULIC SERVO-ACTUATORS

(30) Priorité: 29.09.2022 FR 2209933
(43) Date de publication de la demande: 06.08.2025
(73) Titulaire: Safran Electronics & Defense, 75015 Paris (FR)
(72) Inventeur: HAUTECOEUR, Julien, 77550 MOISSY-CRAMAYEL (FR)
(74) Mandataire: Cabinet Camus Lebkiri
(86) Numéro de dépôt international: PCT/FR2023/051440
(87) Numéro de publication internationale: WO 2024/069080

(56) Documents cités:
- EP-B1- 2 626 302
- US-A- 4 765 568
- US-A1- 2010 084 517
- US-A1- 2010 089 053

## Description

### DOMAINE TECHNIQUE DE L'INVENTION

Le domaine technique de l'invention est celui des commandes de vol d'un aéronef.

La présente invention concerne un système de transmission de commande à une pluralité de servo-actionneurs hydrauliques.

### ARRIERE-PLAN TECHNOLOGIQUE DE L'INVENTION

Dans le domaine aéronautique, les commandes de vol d'un aéronef et en particulier d'un hélicoptère permettent à un pilote de commander et modifier la trajectoire de l'hélicoptère autour des trois axes : tangage, roulis et lacet. En particulier, les commandes de vol primaires d'un hélicoptère sont primordiales pour assurer un vol sécurisé et comportent trois types de systèmes : un système émetteur de commande tel que des pédales de commandes de direction, un levier de pas collectif et/ou une commande des gaz et un manche cyclique, des systèmes récepteurs de commandes tels qu'un rotor principal (pales) et un rotor anti couple et enfin des systèmes de transmission de commande entre les systèmes émetteurs et récepteurs, les systèmes de transmission pouvant être mécaniques et hydromécaniques .

Les transmissions mécaniques, apparues dans les premiers avions, sont composées de câbles sur poulies et/ou de biellettes, permettant au pilote d'exercer directement sa force sur les systèmes récepteurs de commandes, tels que les rotors dans un hélicoptère. Les transmissions mécaniques étant plus complexes à mettre en place et à utiliser dans des aéronefs lourd et grands, celles-ci ont été remplacées par des transmissions hydromécaniques et ne sont utilisées actuellement que dans des avions légers.

Une transmission hydromécanique comprend deux circuits : un circuit mécanique comportant par exemples des câbles et poulies et reliant les commandes du cockpit à un circuit hydraulique, le circuit hydraulique comportant des pompes hydrauliques, réservoirs, tuyaux, valves/servovalves et actionneurs hydrauliques. Le pilote émet une commande, en agissant sur les commandes dans le cockpit, qui sont transmises par le circuit mécanique au circuit hydraulique qui met en œuvre les actionneurs hydrauliques permettant de déplacer le rotor principal et le rotor anti-couple. Les transmissions hydromécaniques sont très utilisées dans les hélicoptères, cependant quelques hélicoptères comportant des transmissions électriques ont été développés.

Contrairement aux avions, les commandes électriques (De l'anglais "Fly-by-Wire"), comprenant des systèmes de transmission électriques, électroniques et informatiques sont encore très peu utilisées dans les hélicoptères. Dans un avion, les systèmes de transmission électriques, électroniques et informatiques transmettent des commandes de vol envoyées par un ordinateur de commande de vol ("FCC") à des actionneurs hydrauliques permettant de mettre en mouvement les gouvernes de l'avion.

L'utilisation d'une architecture Fly-By-Wire est avantageuse dans les avions car, les transmissions mécaniques entre les commandes actionnées par le pilote et les gouvernes d'un avion sont remplacées par des transmissions électriques ce qui permet de réduire les efforts physiques exercés par le pilote. De plus, l'architecture Fly-By-Wire est avantageuse par rapport aux architectures mécaniques et hydromécaniques citées précédemment car l'architecture Fly-by-Wire est facile à installer et à mettre en place et permet d'avoir des fonctions supplémentaires.

Ainsi, dans un hélicoptère, un système de transmission électrique permet de commander les rotors par l'ordinateur de commande de vol (en anglais "FCC" : flight control computer) qui a pleine autorité et qui détermine leur mouvement grâce à la vitesse, la position et l'altitude de l'hélicoptère via des actionneurs hydrauliques.

Cependant, l'utilisation de commandes de vol électroniques actuelles comprend un inconvénient majeur : une défaillance de l'ordinateur de commande de vol et/ou du système de transmission électrique des commandes de vol aux actionneurs hydrauliques peut entrainer la perte de capacité à commander au moins un axe de l'hélicoptère, ce qui a pour conséquence l'altération de l'appareil.

Il existe donc un besoin de trouver une architecture de commande de vols permettant de s'affranchir des liaisons mécaniques entre les commandes et les actionneurs hydrauliques et de garantir une disponibilité élevée des commandes de vols, afin d'éviter l'altération de l'appareil piloté permettant de conserver l'architecture actuelle des actionneurs hydrauliques. En outre, la taille d'un hélicoptère nécessite une architecture de commande de vols électrique peu encombrante spatialement.

Le document US 2010/0089053 A1 divulgue un système d'actionnement hybride comprenant un ou plusieurs actionneurs électromécaniques, un ou plusieurs actionneurs hydrauliques maîtres et un actionneur hydraulique esclave. Chaque actionneur électromécanique est conçu pour être alimenté de manière contrôlée et est configuré, une fois alimenté de manière contrôlée, pour fournir une force motrice. Chaque actionneur hydraulique maître est couplé pour recevoir la force motrice d'un actionneur électromécanique et est configuré, lors de la réception de la force motrice, pour fournir au moins sélectivement du fluide hydraulique sous pression. L'actionneur hydraulique esclave communique avec l'actionneur hydraulique maître pour recevoir de celui-ci du fluide hydraulique sous pression. L'actionneur hydraulique esclave réagit au fluide hydraulique sous pression fourni par l'actionneur hydraulique maître pour se déplacer vers une position de contrôle.

### RESUME DE L'INVENTION

L'invention offre une solution aux problèmes évoqués précédemment grâce à une architecture électromécanique permettant de commander une pluralité de servo-actionneurs hydrauliques d'un aéronef en offrant une disponibilité élevée des commandes de vol tout en minimisant l'encombrement.

Un premier aspect de l'invention concerne un système de transmission de commande à N servo actionneurs hydrauliques, N étant un entier supérieur ou égal à 2, le système comportant :
- N systèmes mécaniques, chaque système mécanique comprenant :
   - un actionneur électrique rotatif comportant une première voie comprenant un moteur, et une deuxième voie comportant un moteur;
   - un actionneur électrique linéaire comportant une troisième voie comportant un moteur, l'actionneur électrique linéaire étant relié à l'actionneur électrique rotatif par une première liaison mécanique et étant adapté pour être relié à un unique servo actionneur hydraulique parmi les N servo actionneurs hydrauliques par une deuxième liaison mécanique;
- Un système de commande comprenant :
   - un premier dispositif de commande relié par une liaison électrique à la première voie de l'actionneur électrique rotatif de chaque système mécanique parmi les N systèmes mécaniques;
   - un deuxième dispositif de commande relié par une liaison électrique à la deuxième voie de l'actionneur électrique rotatif de chaque système mécanique parmi les N systèmes mécanique,
   - un troisième dispositif de commande relié par une liaison électrique à la troisième voie de l'actionneur électrique linéaire de chaque système mécanique parmi les N systèmes mécanique.

Grâce à l'invention, il est possible de s'affranchir d'une architecture entièrement mécaniques entre les commandes du cockpit et les servo-actionneurs hydrauliques d'un hélicoptère, ce qui permet de limiter les efforts exercés par un pilote dans le cockpit. L'invention permet de de plus conserver les servo-actionneurs utilisés actuellement dans les hélicoptères, permettant de réduire les coûts de production. En outre, la présence de trois voies dans chaque système mécanique permet avantageusement d'assurer une disponibilité des commandes en cas de défaillance d'une ou deux voies. En outre, trois dispositifs de commandes permettent de commander une pluralité de N servo-actionneurs hydrauliques, N étant supérieur ou égal à 2, ce qui permet de réduire l'encombrement du système de transmission de commande. L'encombrement du système de transmission est également réduit grâce à l'existence de trois voies pour deux actionneurs électriques et non trois voies pour trois actionneurs électriques.

Outre les caractéristiques qui viennent d'être évoquées dans le paragraphe précédent, le système de transmission de commande selon le premier aspect de l'invention peut présenter une ou plusieurs caractéristiques complémentaires parmi les suivantes, considérées individuellement ou selon toutes les combinaisons techniquement possibles relevant du champ d'application défini par les revendications annexées.

Selon un mode de réalisation, N est égal à 4. Ainsi, trois modules de commandes permettent de commander quatre servo-actionneurs hydrauliques comprenant chacun trois voies auxquelles sont reliés les dispositifs de commande, ce qui permet de réduire l'encombrement par exemple afin de ne pas avoir trois modules de commandes par servo-actionneur hydraulique.

Selon un mode de réalisation, le système de commande est configuré pour fonctionner selon au moins un mode parmi les modes de fonctionnement suivants :
- mode dit de fonctionnement nominal selon lequel :
   - le premier dispositif de commande est dans un état de validité opérationnel, et est configuré pour :
      - recevoir une donnée par la première voie de chaque système mécanique parmi les N systèmes mécaniques, la donnée concernant des paramètres de fonctionnement de ladite première voie de chaque système mécanique parmi les N systèmes mécaniques ;
      - émettre vers un module de contrôle la donnée reçue par la première voie de chaque système mécanique parmi les N systèmes mécaniques;
      - recevoir une commande émise par le module de contrôle à destination du moteur de la première voie de chaque système mécanique parmi les N systèmes mécaniques;
      - émettre la commande vers le moteur de la première voie de chaque système mécanique parmi les N systèmes mécaniques ;
   - le deuxième dispositif est dans un état de validité en veille et est configuré pour :
      - recevoir une donnée par la deuxième voie de chaque système mécanique parmi les N systèmes mécaniques, la donnée concernant des paramètres de fonctionnement de ladite deuxième voie de chaque système mécanique parmi les N systèmes mécaniques ;
      - émettre vers le module de contrôle la donnée reçue par la deuxième voie de chaque système mécanique parmi les N systèmes mécaniques ;
   - le troisième dispositif de commande est dans un état de validité opérationnel et est configuré pour :
      - recevoir une donnée par la troisième voie de chaque système mécanique parmi les N systèmes mécaniques, une donnée concernant des paramètres de fonctionnement de ladite troisième voie de chaque système mécanique;
      - émettre vers le module de contrôle chaque donnée reçue par la troisième voie de chaque système mécanique parmi les N systèmes mécaniques;
      - recevoir une commande émise par le module de contrôle à destination du moteur de la troisième voie de chaque système mécanique parmi les N systèmes mécaniques, simultanément à l'étape de la réception de la commande par le premier dispositif de commande,
      - émettre chaque commande reçue vers le moteur de la troisième voie de chaque système mécanique ;
- Mode dit de panne du premier dispositif de commande selon lequel :
   - le premier dispositif de commande est dans un état de validité hors fonctionnement,
   - le deuxième dispositif de commande est configuré pour passer d'un état de validité en veille à un état de validité opérationnel, le changement d'état du deuxième dispositif de commande résultant de l'état de validité hors fonctionnement du premier dispositif de commande, et est configuré pour :
      - recevoir une donnée par la première voie de chaque système mécanique parmi les N systèmes mécaniques, la donnée concernant des paramètres de fonctionnement de ladite première voie de chaque système mécanique parmi les N systèmes mécaniques;
      - émettre vers le module de contrôle la donnée reçue par la première voie de chaque système mécanique parmi les N systèmes mécaniques ;
      - recevoir par le module de contrôle une commande à émettre vers le moteur de la deuxième voie de chaque système mécanique parmi les N systèmes mécaniques ;
      - émettre la commande vers le moteur de la deuxième voie de chaque système mécanique parmi les N systèmes mécaniques;
   - le troisième dispositif de commande est dans un état de validité opérationnel et est configuré pour :
      - recevoir une donnée par la troisième voie de chaque système mécanique parmi les N systèmes mécaniques, la deuxième donnée concernant des paramètre de fonctionnement de ladite troisième voie de chaque système mécanique parmi les N systèmes mécaniques ;
      - émettre vers le module de contrôle la donnée reçue par la troisième voie de chaque système mécanique parmi les N systèmes mécaniques ;
      - recevoir par le module de contrôle, simultanément à la réception de chaque commande par le deuxième dispositif de commande, une commande à émettre vers le moteur de la troisième voie de chaque système mécanique parmi les N systèmes mécaniques ;
      - émettre la commande vers le moteur de la troisième voie de chaque système mécanique parmi les N systèmes mécaniques ;
- Mode dit de panne du troisième dispositif de commande selon lequel :
   - le premier dispositif de commande est dans un état de validité opérationnel, et est configuré pour :
      - recevoir une donnée par la première voie de chaque système mécanique parmi les N systèmes mécaniques, la donnée concernant des paramètre de fonctionnement de ladite première voie ;
      - émettre vers le module de contrôle la donnée reçue par la première voie de chaque système mécanique parmi les N systèmes mécaniques ;
      - recevoir par le module de contrôle au moins une commande à émettre vers le moteur de la première voie de chaque système mécanique parmi les N systèmes mécaniques;
      - émettre la commande vers le moteur de la première voie de chaque système mécanique parmi les N systèmes mécaniques;
   - le deuxième dispositif de commande est dans un état de validité en veille et est configuré pour :
      - recevoir au moins une donnée par la deuxième voie, la donnée concernant des paramètre de fonctionnement de ladite deuxième voie ;
      - émettre vers le module de contrôle la donnée reçue par la deuxième voie de chaque système mécanique parmi les N systèmes mécaniques ;
   - le troisième dispositif de commande est dans un état hors fonctionnement ;
pour chaque mode de fonctionnement, la somme de la commande reçue respectivement par le moteur de la première voie ou le moteur de la deuxième voie et/ou le moteur de la troisième voie de chaque système mécanique parmi les N systèmes mécaniques assure la commande mécanique du servo actionneur hydraulique relié audit système mécanique . Avantageusement, le système de transmission de commande s'adapte en cas de panne de l'un des dispositifs de commande, permettant de continuer à commander chaque serveur-actionneur hydraulique parmi les N servo-actionneurs hydrauliques malgré une panne de l'un des dispositifs de commandes et donc malgré une coupure d'un lien électrique avec l'une des trois voies ou avec deux voies dont une première est comprise dans l'actionneur rotatif et une deuxième est comprise dans l'actionneur linéaire.

Selon un mode de réalisation, pour chaque système mécanique parmi les N systèmes mécaniques :
- la première voie comprend un capteur de position moteur et un capteur de position rotatif ;
- La deuxième voie comprend un capteur de position moteur et un capteur de position rotatif ;
- la troisième voie comprend un troisième capteur de position moteur et un capteur de position linéaire ;
et selon lequel une donnée reçue par une voie parmi la première, deuxième et troisième voie concernant les paramètres de fonctionnement de cette voie comprend :
- une donnée concernant la position du moteur compris dans la voie et/ou
- une donnée concernant la position de l'actionneur dans lequel est comprise ladite voie.

Selon un mode de réalisation, une commande émise par le module de contrôle vers un dispositif de commande comprend une consigne de position destinée au moteur compris dans chaque voie reliée au dit dispositif de commande.

Selon un mode de réalisation, l'actionneur rotatif de chaque système mécanique parmi les N systèmes mécaniques est irréversible.

Selon un mode de réalisation, l'actionneur linéaire de chaque système mécanique parmi les N systèmes mécaniques est irréversible.

Selon un mode de réalisation, pour chaque système mécanique parmi les N systèmes mécaniques, la première liaison mécanique et la deuxième liaison mécanique sont en série.

Un deuxième aspect de l'invention concerne un ensemble de commande de N servo actionneurs hydrauliques caractérisé en ce qu'il comprend :
- un module de contrôle ;
- un système de transmission de commande selon le premier aspect de l'invention.
- N servo actionneurs hydrauliques.

Un troisième aspect de l'invention concerne un aéronef comprenant un ensemble de commande selon le deuxième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La [Fig. 1] montre une représentation schématique d'un ensemble de commande de N=4 servo-actionneurs hydrauliques.
- La [Fig. 2] est un schéma d'un actionneur électrique rotatif compris dans un système mécanique.
- La [Fig. 3] est un schéma d'un actionneur électrique linéaire compris dans un système mécanique.
- La [Fig. 4] est un schéma d'un dispositif de commande.
- La [Fig. 5] est un schéma de l'ensemble de commande de N = 4 servo actionneurs hydrauliques lorsque le système de transmission selon l'invention est dans un mode de fonctionnement dit nominal ;
- La [Fig. 6] est un schéma de l'ensemble de commande de N = 4 servo actionneurs hydrauliques lorsque le système de transmission selon l'invention est dans un mode de fonctionnement dit panne du premier dispositif de commande ;
- La [Fig. 7] est un schéma de l'ensemble de commande de N = 4 servo actionneurs hydrauliques lorsque le système de transmission selon l'invention est dans un mode de fonctionnement dit panne du troisième dispositif de commande.

### DESCRIPTION DETAILLEE

Sauf précision contraire, un même élément apparaissant sur des figures différentes présente une référence unique.

Un aspect de l'invention concerne un ensemble de commande de N servo-actionneurs hydrauliques.

De préférence, l'ensemble de commande est compris dans un aéronef.

De préférence, l'aéronef est un hélicoptère.

N est un entier supérieur ou égal à 2, par exemple égal à 3, de préférence égal à 4.

L'ensemble de commande comprend un module de contrôle, un système de transmission de commande selon l'invention et N servo-actionneurs hydrauliques.

Le module de contrôle comprend au moins un calculateur et au moins une alimentation électrique.

De préférence, le module de contrôle comprend quatre calculateurs.

Chaque calculateur comprend un processeur.

De préférence chaque calculateur est un ordinateur de commande de vol (de l'anglais "FCC : Flight Control Computer").

L'alimentation électrique comprend de préférence une première et une deuxième sorties configurées pour délivrer chacune une tension, de préférence une tension continue.

De préférence, la valeur tension délivrée par la première sortie et/ou la deuxième sortie vaut 28 volts.

En particulier, le système de transmission de commande comporte un système de commande et comporte N systèmes mécaniques d'architecture identique.

Le système de commande du système de transmission de commande comporte un premier, un deuxième et un troisième dispositifs de commandes.

Chaque système mécanique parmi les N systèmes mécaniques du système de transmission de commande comprend un actionneur électrique rotatif et un actionneur électrique linéaire.

De préférence, l'actionneur électrique rotatif de chaque système mécanique parmi les N systèmes mécaniques a une architecture identique aux autres actionneurs électriques rotatifs des autres systèmes mécaniques.

De préférence, l'actionneur électrique linéaire de chaque système mécanique parmi les N systèmes mécaniques a une architecture identique aux autres actionneurs linéaires des autres systèmes mécaniques.

L'actionneur électrique rotatif de chaque système mécanique parmi les N systèmes mécaniques comprend une première voie liée par une liaison électrique au premier dispositif de commande. Ladite liaison électrique comprend au moins un signal électrique. Le signal électrique peut être numérique ou analogique.

L'actionneur électrique rotatif de chaque système mécanique parmi les N systèmes mécaniques comprend en outre une deuxième voie liée par une liaison électrique au deuxième dispositif de commande. Ladite liaison électrique comprend au moins un signal électrique. Le signal numérique peut être numérique ou analogique.

L'actionneur électrique linéaire de chaque système mécanique parmi les N systèmes mécaniques comprend une troisième voie liée par une liaison électrique au troisième dispositif de commande. La troisième liaison électrique comprend au moins un signal électrique. Le signal électrique peut être numérique ou analogique.

Ainsi, le premier dispositif de commande est lié à la première voie de l'actionneur rotatif de chaque système mécanique parmi les N systèmes mécaniques.

Ainsi, le deuxième dispositif de commande est lié à la deuxième voie de l'actionneur rotatif de chaque système mécanique parmi les N systèmes mécaniques.

Ainsi, le troisième dispositif de commande est lié à la troisième voie de l'actionneur linéaire de chaque système mécanique parmi les N systèmes mécaniques.

Pour chaque système mécanique parmi les N systèmes mécaniques, l'actionneur rotatif dudit système mécanique est lié par une première liaison mécanique à l'actionneur électrique linéaire dudit système mécanique et l'actionneur linéaire lié par une deuxième liaison mécanique à un unique servo actionneur hydraulique parmi les N servo-actionneurs hydrauliques. Par "actionneur linéaire relié par une deuxième liaison mécanique à un unique servo-actionneur" on entend un actionneur linéaire relié à un servo-actionneur hydraulique auquel aucun autre actionneur linéaire n'est relié à l'exception de l'actionneur linéaire considéré. Ainsi, le servo-actionneur hydraulique considéré est relié uniquement à l'actionneur linéaire considéré.

Ainsi, chaque système mécanique parmi les N systèmes mécaniques est lié à un unique servo-actionneur hydraulique parmi les N servo-actionneurs hydrauliques. Par " chaque système mécanique parmi les N systèmes mécaniques est lié à un unique servo-actionneur hydraulique parmi les N servo-actionneurs hydrauliques " on entend que chaque système mécanique est relié à un seul servo-actionneur hydraulique auquel aucun autre système mécanique n'est relié à l'exception du système mécanique considéré. Ainsi, chaque servo-actionneur n'est lié qu'à un seul système mécanique.

Pour chaque système mécanique parmi les N systèmes mécaniques, le première liaison mécanique est de préférence une liaison pivot et la deuxième liaison mécanique est de préférence une liaison pivot. De préférence, la première liaison mécanique et la deuxième liaison mécanique sont en série.

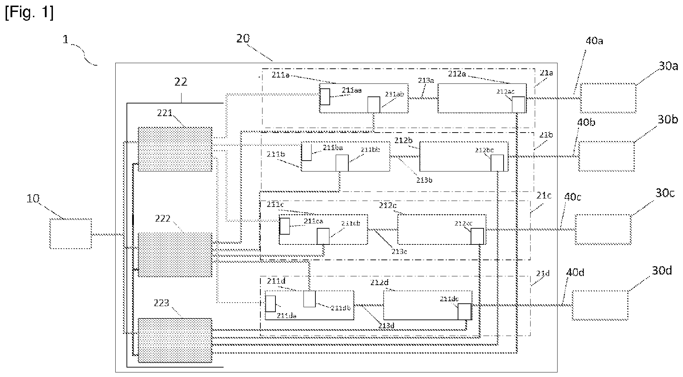

La [Fig. 1] présente un mode de réalisation de l'ensemble de commande 1 dans le cas N = 4. Ainsi, l'ensemble de commande comprend le module de contrôle 10, le système de transmission de commande 20 et quatre servo-actionneurs hydrauliques 30a, 30b, 30c et 30d d'architecture identique.

En référence à la [Fig. 1], le système de transmission de commande 20 comprend le système de commande 22 comportant les premier 221, deuxième 222 et troisième 223 dispositifs de commande.

En référence à la [Fig. 1], le système de transmission de commande comprend N = 4 systèmes mécaniques 21a, 21b, 21c et 21d d'architecture identique.

En référence à la [Fig. 1], chaque système mécanique 21a, 21b, 21c et 21d comprend respectivement un actionneur électrique rotatif 211a, 211b, 211c et 211d et comprend respectivement un actionneur électrique linéaire 212a, 212b, 212c et 212d.

Selon le mode de réalisation de la [Fig. 1], chaque actionneur électrique rotatif 211a, 211b, 211c et 211d comprend respectivement une première voie 211aa, 211ba, 211ca et 211da.

Selon le mode de réalisation de la [Fig. 1], chaque actionneur électrique rotatif 211a, 211b, 211c et 211d comprend respectivement une deuxième voie 211ab, 211bb, 211cb et 211db.

Chaque première voie 211aa, 211ba, 211ca, 211da est reliée électriquement au premier dispositif de commande 221.

Chaque deuxième voie 211ab, 211bb, 211cb, 211db est reliée électriquement au deuxième dispositif de commande 222.

Selon le mode de réalisation de la [Fig. 1], chaque actionneur linéaire rotatif 212a, 212b, 212c et 212d comprend respectivement une troisième voie 212aa, 212ba, 212ca et 212da.

Chaque troisième voie 212aa, 212ba, 212ca et 212da est reliée électriquement au troisième dispositif de commande 223.

Selon le mode de réalisation de la [Fig. 1], l'actionneur électrique rotatif 211a du système mécanique 21a est relié par une première liaison mécanique 213a à l'actionneur électrique linéaire 212a du même système mécanique 21a, et ledit actionneur électrique linéaire 212a est relié par une deuxième liaison mécanique 40a au servo-actionneur hydraulique 30a.

Selon le mode de réalisation de la [Fig. 1], l'actionneur électrique rotatif 211b du système mécanique 21b est relié par une première liaison mécanique 213b à l'actionneur électrique linéaire 212b du même système mécanique 21b, et ledit actionneur électrique linéaire 212b est relié par une deuxième liaison mécanique 40b au servo-actionneur hydraulique 30b.

Selon le mode de réalisation de la [Fig. 1], l'actionneur électrique rotatif 211c du système mécanique 21c est relié par une première liaison mécanique 213c à l'actionneur électrique linéaire 212c du même système mécanique 21c, et ledit actionneur électrique linéaire 212c est relié par une deuxième liaison mécanique 40c au servo-actionneur hydraulique 30c.

Selon le mode de réalisation de la [Fig. 1], l'actionneur électrique rotatif 211d du système mécanique 21d est relié par une première liaison mécanique 213c à l'actionneur électrique linéaire 212d du même système mécanique 21d, et ledit actionneur électrique linéaire 212d est relié par une deuxième liaison mécanique 40d au servo-actionneur hydraulique 30d.

Chaque actionneur électrique rotatif 211a, 211b, 211c et 211d ayant une architecture identique, seule l'architecture de l'actionneur électrique rotatif 211a sera détaillée dans la suite.

En particulier, chaque actionneur électrique rotatif de chaque système mécanique parmi les N systèmes mécaniques a une architecture identique à l'architecture de l'actionneur rotatif 211a.

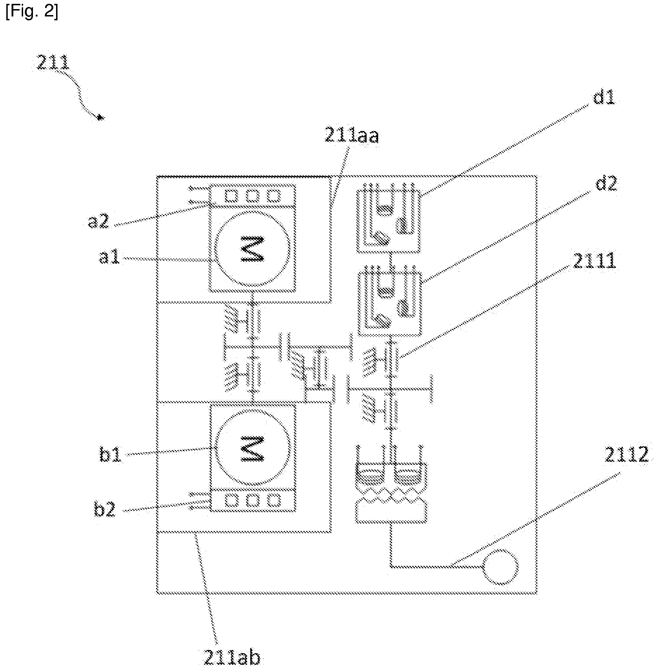

La [Fig. 2] est une représentation schématique de l'actionneur électrique rotatif 211a. L'actionneur rotatif 211a comprend la première voie 211aa et la deuxième voie 211ab.

L'actionneur électrique rotatif 211 peut comprendre un premier réducteur 2111 et un arbre de sortie 2112.

La première voie 211aa de l'actionneur rotatif 211a comprend un moteur a1, de préférence un moteur sans balai, et un capteur de position moteur a2, configuré pour mesurer la position du moteur a1 de la première voie 211aa.

De préférence, le moteur a1 de la première voie 211aa est un moteur triphasé et comprend trois entrées triphasées, non représentées sur la figure 2.

De préférence, le capteur de position moteur a2 de la première voie 211aa est un capteur à effet Hall (de l'anglais " Hall Effet Sensor").

La deuxième voie 211ab de l'actionneur 211a comprend un moteur b1, de préférence un moteur sans balai, et un capteur de position moteur b2, configuré pour mesurer la position du moteur b1 de la deuxième voie 211ab.

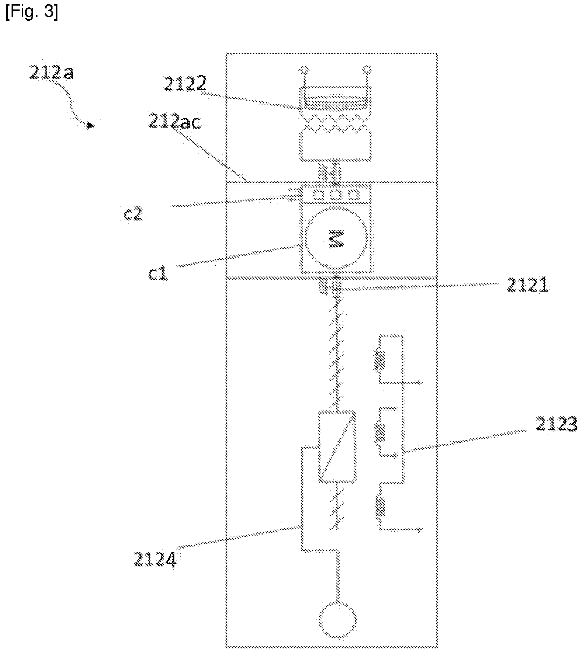

De préférence le moteur b1 de la deuxième voie 211ab est un moteur triphasé et comprend trois entrées triphasées, non représentées sur la figure 3.

De préférence, le capteur de position moteur b2 de la deuxième voie 211ab est un capteur à effet Hall. L'arbre de sortie 2112 comprend de préférence un premier capteur de position angulaire d1, un deuxième capteur de position angulaire d2, un frein d3, de préférence un frein d'embrayage à crabots à commande électrique à double alimentation .

De préférence le premier capteur de position angulaire d1 est relié à la première voie 211aa, et le deuxième capteur de position angulaire d2 est relié à la deuxième voie 211ab. Les actionneurs rotatifs 211b, 211cet 211d ont chacun la même architecture que celle décrite pour 211a.

Selon un mode de réalisation non représenté sur la [Fig. 2], le premier capteur de position angulaire d1 est compris dans la première voie 211aa, et le deuxième capteur de position angulaire d2 est compris dans la deuxième voie 211ab.

Le frein d3 est de préférence un frein à manque de courant .

Le premier et deuxième capteur de position angulaire (d1, d2) sont configurés pour mesurer la position de l'actionneur électrique rotatif 211a.

Lorsque l'arbre de sortie 2112 comprend le frein d'embrayage à crabots à commande électrique à double alimentation, ledit frein d'embrayage permet d'assurer l'irréversibilité de l'actionneur rotatif 211a.

Chaque actionneur électrique linéaire 212a, 212b, 212c et 212d ayant une architecture de préférence identique, seule l'architecture de l'actionneur électrique linéaire 212a sera détaillée dans la suite.

En particulier, chaque actionneur électrique linéaire de chaque système mécanique parmi les N systèmes mécaniques a une architecture identique à l'architecture l'actionneur linéaire 212a.

La figure 3 [Fig. 3] est une représentation schématique de l'actionneur électrique linéaire 212a.

L'actionneur électrique linéaire 212a comprend la troisième voie 212ac.

L'actionneur électrique linéaire 212 peut comprendre un réducteur 2121, un frein 2122, un capteur de position linéaire 2123 et une vis à billes 2124.

Le frein 2122 est de préférence un frein d'embrayage à crabots à commande électrique à double alimentation.

Le frein 2122 est de préférence un frein à manque de courant.

Lorsque l'actionneur électrique linéaire 212a comprend le frein d'embrayage à crabots à commande électrique, l'actionneur électrique linéaire 212a est irréversible.

La troisième voie 212ac de l'actionneur électrique linéaire 212 comprend un moteur c1, de préférence un moteur sans balai, et un capteur de position moteur c2 configuré pour mesurer la position du moteur c1.

De préférence le moteur c1 de la troisième voie 212ac est un moteur triphasé et comprend une entrée triphasée, non représentée sur la figure 3.

De préférence, le capteur de position moteur c2 de la troisième voie 212ac est un capteur à effet Hall. Selon un mode de réalisation, le capteur de position linéaire 212d est compris dans la troisième voie 212c.

Les premier, deuxième et troisième dispositifs de commande du système de commande de chaque système mécanique parmi les N systèmes mécaniques ont de préférence une architecture identique.

Chaque dispositif de commande du système de commande du système de transmission de commande comprend un module de commande, un module de traitement et N modules d'actionnement.

Le dispositif de commande peut comprendre un module de filtrage.

Le module de commande peut comprendre un premier et un deuxième ports d'alimentation électrique configurés pour recevoir chacun une tension électrique, de préférence une tension continue d'une valeur de 28V.

Le module de commande comprend au moins un port de commande. De préférence, le port de commande est adapté pour être relié électriquement au calculateur du module de contrôle et est adapté pour recevoir des commandes électriques.

Selon le mode de réalisation selon lequel le module de contrôle comprend quatre calculateurs, le module de commande comprend quatre ports de commandes dont chaque port de commande est adapté pour être relié électriquement respectivement à un unique calculateur parmi les quatre calculateurs.

Par " chaque port de commande est adapté pour être relié électriquement respectivement à un unique calculateur parmi les quatre calculateurs " on entend que chaque port de commande est relié à un calculateur auquel aucun port de commande n'est relié à l'exception du système mécanique considéré.

Le module de commande peut comprendre en outre un port de données d'entrée en série (de l'anglais DSI : Data Serial Input) et un port de données de sortie en série (de l'anglais DSO : Data Serial Output).

Le port de données d'entrée en série est configuré pour recevoir un signal d'activation (« enable ») ou de désactivation (« disable ») au calculateur associé par exemple. Quant au port de données de sortie en série, celui-ci peut être configuré pour émettre un signal vers un autre calculateur.

Selon un mode de réalisation, le module de commande comprend un port de communication. Ledit port de communication est configuré pour recevoir des instructions logicielles, par exemple.

Le module de filtrage est adapté pour recevoir un ou plusieurs signaux électriques par le module de commande et pour les filtrer, dans le but par exemple de réduire des bruits compris dans le ou les plusieurs signaux électriques reçus.

Le module de traitement est de préférence un processeur comprenant N cœurs logiques.

Le module de traitement est configuré pour traiter des signaux reçus par le module de commande et pour les transmettre à chaque module d'actionnement parmi les N modules d'actionnement.

Lorsque chaque dispositif de commande parmi les premier, deuxième et troisième dispositifs de commande comprend le module de filtrage, le module de traitement est configuré pour traiter des signaux électrique émis par le module de filtrage et pour les transmettre à chaque module d'actionnement parmi les N modules d'actionnement.

Le module de traitement est en outre configuré pour traiter des signaux reçus par chaque module d'actionnement parmi les N modules d'actionnement et les transmettre au module de commande.

Chaque module d'actionnement parmi les N modules d'actionnement est adapté pour être lié à une unique voie d'un système mécanique parmi les N systèmes mécaniques.

En particulier, chaque module d'actionnement parmi les N modules d'actionnement comprend un module de pilotage moteur, un module de réception de données et un module de pilotage de frein.

Le module de pilotage moteur d'un module d'actionnement parmi les N modules d'actionnement est adapté pour piloter le moteur compris dans la voie à laquelle est reliée le module d'actionnement.

Le module de pilotage de moteur comprend une sortie triphasée, la sortie triphasée comportant trois courants électriques, de préférence trois courants électriques continus.

Le module de pilotage de frein délivre une sortie biphasée, la sortie biphasée comportant deux courants électriques, de préférence deux courants électriques continus.

Le module de réception de données comprend de préférences un premier port et un deuxième port. Le premier port du module de réception de données est adapté pour recevoir des données à partir du capteur de position du moteur compris dans la voie à laquelle est reliée le module d'actionnement, et le deuxième port du module de réception de données est adapté pour recevoir des données à partir du capteur de position de l'actionneur comprenant la voie à laquelle est reliée le module d'actionnement.

Avantageusement, un seul dispositif de commande permet de communiquer et d'émettre des commandes vers N voies auquel il est relié.

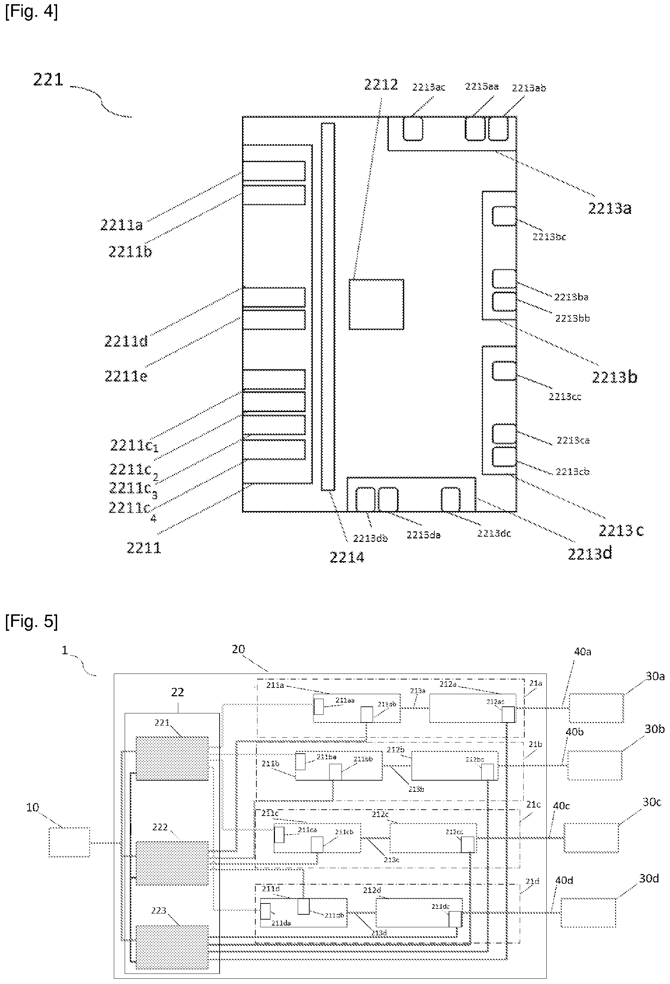

La [Fig. 4] est un mode de réalisation du premier dispositif de commande 221, dans le cas N = 4. L'architecture des premier 221, deuxième 222 et troisième 223 dispositifs de commande étant identique, seul le premier dispositif de commande 221 est représenté.

Ainsi, dans ce mode de réalisation, le dispositif de commande 221 représenté comprend le module de commande 2211, le module de filtrage 2214, le module de traitement 2212 et N = 4 modules d'actionnement 2213a, 2213b, 2213c, 2213d.

Les quatre modules d'actionnement 2213a, 2213b, 2213c, 2213d ont des architectures identiques de préférence.

En référence à la [Fig. 4], le module de commande 2211 comprend quatre ports de commande 2211c, le port de données d'entrée en série 2211d (de l'anglais DSI : Data Serial Input) et le port de données de sorties en série 2211e (de l'anglais DSO : Data Serial Output). Le module de commande 211 comprend en outre le premier 2211a et le deuxième 2211b ports d'alimentation électrique configurés pour recevoir une tension électrique, de préférence une tension continue d'une valeur de 28V.

En référence à la [Fig. 4], le module d'actionnement 2213a comprend le module de pilotage de moteur 2213aa, le module de réception de données 2213ab et le module de pilotage de frein 2213ac.

En référence à la [Fig. 4], le module d'actionnement 2213b comprend le module de pilotage de moteur 2213ba, le module de réception de données 2213bb et le module de pilotage de frein 2213bc.

En référence à la [Fig. 4], le module d'actionnement 2213c comprend le module de pilotage de moteur 2213ca, le module de réception de données 2213cb et le module de pilotage de frein 2213cc. Les dispositifs de commande 222 et 223 ont une architecture identique à l'architecture décrite pour le dispositif de commande 221.

Le système de transmission selon l'invention fonctionne selon au moins un mode parmi les modes de fonctionnement suivants : mode de fonctionnement dit nominal, mode de fonctionnement dit de panne du premier dispositif de commande et mode de fonctionnement dit de panne du troisième dispositif de commande.

Durant chaque mode de fonctionnement parmi les modes de fonctionnement cités, les dispositifs de commande peuvent être respectivement chacun dans un état de validité parmi au moins les trois états de validité suivants : état de validité opérationnel, état de validité en veille, état de validité défectueux.

On entend par état de validité opérationnel d'un dispositif de commande un état de validité durant lequel le dispositif de commande est configuré pour mettre en œuvre une pluralité d'étapes opérationnelles décrites dans la suite.

Une première étape opérationnelle est une étape de réception par le dispositif de commande d'au moins une donnée par chaque voie reliée au dit dispositif de commande, via le module de réception de données du module d'actionnement relié à ladite voie, une donnée concernant des paramètres de fonctionnement de ladite voie.

La donnée concernant les paramètres de fonctionnement de chaque voie reliée au dit dispositif de commande comprend une donnée concernant la position du moteur de la voie reliée au dispositif de commande et/ou une donnée concernant la position de l'actionneur électrique comprenant la voie reliée au dispositif de commande.

La donnée concernant la position du moteur de la voie reliée au dit dispositif de commande est mesurée par le capteur de position moteur de ladite voie.

La donnée concernant la position de l'actionneur de la voie reliée au dit dispositif de commande est mesurée par le capteur de position rotatif ou linéaire de l'actionneur comprenant ladite voie.

Une deuxième étape opérationnelle est une étape d'émission vers le module de contrôle et en particulier à le au moins calculateur, via le port de commande, la donnée concernant les paramètres de fonctionnement.

Une troisième étape opérationnelle est une étape de réception d'une commande émise par le au moins calculateur, via le port de commande, à destination du moteur de chaque voie reliée au dispositif de commande.

La commande à destination du moteur de chaque voie reliée au dispositif de commande est de préférence une commande en position dudit moteur. De préférence, la commande en position dudit moteur est une valeur réelle, ayant de préférence une unité en mm .

Une quatrième étape opérationnelle est une étape d'émission, par le module de traitement du dispositif de commande, de la commande vers le du moteur compris dans chaque voie reliée au dispositif de commande.

On entend par état de validité en veille d'un dispositif de commande, un état durant lequel le dispositif de commande est configuré pour mettre œuvre des étapes de veille.

Une première étape de veille est une étape de réception par le dispositif de commande d'une donnée par chaque voie reliée au dit dispositif de commande, via le module de réception de données, la donnée concernant des paramètres de fonctionnement de ladite voie.

La donnée concernant les paramètres de fonctionnement de chaque voie comprend une donnée concernant la position du premier moteur compris dans la voie reliée au dit dispositif de commande et/ou une donnée concernant la position de l'actionneur comprenant la voie reliée au dit dispositif de commande.

Une deuxième étape de veille est une étape de transmission au module de contrôle, via le port de commande, de la donnée concernant les paramètres de fonctionnement reçue par chaque voie reliée au dit dispositif de commande.

On entend par état de validité défectueux d'un dispositif de commande, un état de validité durant lequel la liaison électrique entre le dit dispositif de commande et chaque voie à laquelle il est relié est rompue et aucune communication entre les deux n'est possible.

Dans la suite, on confondra "dispositif de commande dans un état de validité opérationnel" et "dispositif de commande opérationnel".

Dans la suite, on confondra "dispositif de commande dans un état de validité en veille" et "dispositif de commande en veille".

Dans la suite, on confondra "dispositif de commande dans un état de validité défectueux" et "dispositif de commande défectueux".

Chaque dispositif de commande parmi le premier, deuxième et troisième dispositif de commande est configuré pour communiquer son état de validité aux autres dispositifs via le module de commande et plus précisément via le port de données de sortie en série.

Chaque dispositif de commande parmi le premier, deuxième et troisième dispositif de commande est configuré pour recevoir l'état de validité des autres dispositifs via le module de commande et plus précisément via le port de données d'entrée en série.

Chaque dispositif de commande parmi le premier, deuxième et troisième dispositif de commande est configuré pour communiquer son état de validité au module de contrôle via le port de commande adapté pour relier le dispositif de commande audit calculateur.

Le module de contrôle émet N commandes vers chaque dispositif de commande étant dans un état de validité opérationnel, la commande étant destinée au moteur de chaque voie reliée au dit dispositif. De préférence, chaque dispositif de commande étant dans un étant de validité opérationnel reçoit N commandes, simultanément aux autres dispositifs de commandes étant dans un état de validité opérationnel.

Chaque commande parmi les N commandes reçues par un dispositif de commande opérationnel est destinée à un unique servo-actionneur hydraulique parmi les N servo-actionneurs hydrauliques. Ainsi, chaque servo-actionneur hydraulique reçoit une commande parmi les N commandes.

De préférence, chaque commande parmi les N commandes comprend une fraction de la valeur de la position souhaitée pour le servo-actionneur hydraulique auquel ladite commande est destinée.

De préférence, la fraction de la valeur de position souhaitée de chaque servo-actionneur hydraulique parmi les N servo-actionneurs hydrauliques est déterminée en fonction d'une valeur de position souhaitée dudit servo-actionneur hydraulique et du nombre de dispositifs de commande opérationnels.

Par exemple, la fraction de la valeur de position souhaitée pour chaque servo-actionneur hydraulique parmi les N servo-actionneurs hydrauliques est obtenue en divisant la valeur de position souhaitée dudit servo-actionneur hydraulique par le nombre de dispositifs de commande opérationnels.

Ainsi, la commande de chaque servo actionneur hydraulique parmi les N servo-actionneurs hydrauliques résulte de la somme des valeurs comprises dans les commandes reçues respectivement par chaque dispositif de commande opérationnel et émises vers le système mécanique parmi les N systèmes mécaniques relié au dit servo-actionneur hydraulique.

La figure 5 [Fig. 5] représente un mode de réalisation de l'ensemble de commande 1 pour N = 4 et lorsque le système de transmission selon l'invention fonctionne selon un mode dit de fonctionnement nominal.

Selon le mode de fonctionnement nominal, le premier dispositif de commande 221 est opérationnel, le deuxième dispositif de commande 222 est dans en veille et le troisième dispositif de commande 223 est opérationnel.

Par exemple, lorsque le mode de fonctionnement du système de transmission 20 selon l'invention est dit nominal, afin de déplacer chaque servo actionneur hydraulique d'une valeur égale à X, le module de contrôle 10 envoie N = 4 premières commandes au premier dispositif de commande 221 opérationnel, chaque première commande parmi les N = 4 premières commandes comprenant une valeur de position égale à X/2 et N deuxièmes commandes au troisième dispositif de commande 223 opérationnel, chaque deuxième commande parmi les N = 4 deuxièmes commandes comprenant une valeur égale à X/2. De préférence, les N = 4 premières commandes et les N= 4 deuxièmes commandes sont émises simultanément.

En particulier, le moteur de la première voie 211aa du système mécanique 21a reçoit une commande en position dont la valeur est égale à X/2, permettant à l'actionneur rotatif 211a de se déplacer d'une valeur égale à X/2 et de mettre en mouvement l'actionneur linéaire 212a du système mécanique 21a grâce à la première liaison mécanique 213a. De plus, le moteur de la troisième voie 212ac reçoit, simultanément à la réception de la commande par le moteur de la première voie 211aa, une commande en position émise par le module de contrôle dont la valeur est égale à X/2, permettant de déplacer l'actionneur linéaire 212a d'une valeur égale à X/2. Ainsi, l'actionneur linéaire 212a reçoit une commande électrique de valeur X/2, et une commande mécanique de valeur X/2, l'actionneur linéaire se déplace donc d'une valeur X et permet de déplacer, via la deuxième liaison mécanique 40a, le servo actionneur hydraulique 30a, relié au système mécanique 12a, selon une valeur X.

En particulier, le moteur de la première voie 211ba du système mécanique 21b reçoit une commande en position dont la valeur est égale à X/2, permettant à l'actionneur rotatif 211b de se déplacer d'une valeur égale à X/2 et de mettre en mouvement l'actionneur linéaire 212b du système mécanique 21b grâce à la première liaison mécanique 213b. De plus, le moteur de la troisième voie 212bc reçoit, simultanément à la réception de la commande par le moteur de la première voie 211ba, une commande en position émise par le module de contrôle dont la valeur est égale à X/2, permettant de déplacer l'actionneur linéaire 212b d'une valeur égale à X/2. Ainsi, l'actionneur linéaire 212b reçoit une commande électrique de valeur X/2, et une commande mécanique de valeur X/2, l'actionneur linéaire se déplace donc d'une valeur X et permet de déplacer, via la deuxième liaison mécanique 40b, le servo actionneur hydraulique 30b, relié au système mécanique 12b, selon une valeur X.

En particulier, le moteur de la première voie 211ca du système mécanique 21c reçoit une commande en position dont la valeur est égale à X/2, permettant à l'actionneur rotatif 211c de se déplacer d'une valeur égale à X/2 et de mettre en mouvement l'actionneur linéaire 212c du système mécanique 21c grâce à la première liaison mécanique 213c. De plus, le moteur de la troisième voie 212cc reçoit, simultanément à la réception de la commande par le moteur de la première voie 211ca, une commande en position émise par le module de contrôle dont la valeur est égale à X/2, permettant de déplacer l'actionneur linéaire 212c d'une valeur égale à X/2. Ainsi, l'actionneur linéaire 212c reçoit une commande électrique de valeur X/2, et une commande mécanique de valeur X/2, l'actionneur linéaire se déplace donc d'une valeur X et permet de déplacer, via la deuxième liaison mécanique 40c, le servo actionneur hydraulique 30c, relié au système mécanique 12c, selon une valeur X.

En particulier, le moteur de la première voie 211da du système mécanique 21d reçoit une commande en position dont la valeur est égale à X/2, permettant à l'actionneur rotatif 211d de se déplacer d'une valeur égale à X/2 et de mettre en mouvement l'actionneur linéaire 212c du système mécanique 21d grâce à la première liaison mécanique 213d. De plus, le moteur de la troisième voie 212dc reçoit, simultanément à la réception de la commande par le moteur de la première voie 211da, une commande en position émise par le module de contrôle dont la valeur est égale à X/2, permettant de déplacer l'actionneur linéaire 212d d'une valeur égale à X/2. Ainsi, l'actionneur linéaire 212d reçoit une commande électrique de valeur X/2, et une commande mécanique de valeur X/2, l'actionneur linéaire se déplace donc d'une valeur X et permet de déplacer, via la deuxième liaison mécanique 40d, le servo actionneur hydraulique 30d, relié au système mécanique 12d, selon une valeur X.

X peut être une valeur en millimètres comprise dans l'intervalle [-35mm, 35mm].

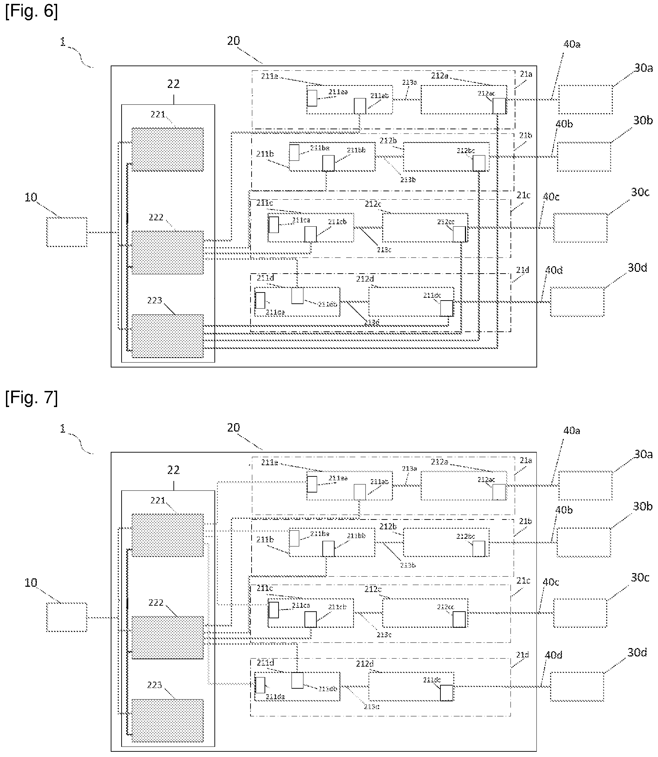

La figure 6 [Fig. 6] représente l'ensemble de commande 1, lorsque le système selon l'invention fonctionne selon un mode dit de panne du premier dispositif de commande 211, pour N = 4.

Selon le mode de fonctionnement dit de panne du premier dispositif de commande 221, le premier dispositif de commande 221 est dans un état de validité défectueux, le deuxième dispositif 222 de commande est configuré pour passer d'un état de validité en veille à un état de validité opérationnel, le changement d'état du deuxième dispositif de commande 222 résultant de l'état de validité hors fonctionnement du premier dispositif de commande 221 et le troisième dispositif de commande 223 est dans un état de validité opérationnel.

Par exemple, lorsque le mode de fonctionnement du système de transmission 20 selon l'invention est dit de panne du premier dispositif 221, afin de déplacer chaque servo actionneur hydraulique 30a, 30b, 30c, et 30d d'une valeur égale à X, le module de contrôle 10 envoie N = 4 premières commandes au deuxième dispositif de commande 222 opérationnel, chaque première commande comprenant une valeur égale à X/2 envoie N deuxièmes commandes au troisième dispositif de commande 223 opérationnel, chaque deuxième commande comprenant une valeur égale à X/2.

En particulier, le moteur de la deuxième voie 211ab du système mécanique 211a reçoit une commande en position dont la valeur est égale à X/2, permettant à l'actionneur rotatif 211a de se déplacer d'une valeur égale à X/2 et de mettre en mouvement l'actionneur linéaire 212a grâce à la première liaison mécanique 231a. De plus, le moteur de la troisième voie 212ac reçoit, simultanément à la réception de la commande par le moteur de la deuxième voie 211ab, une commande en position dont la valeur est égale à X/2, permettant de déplacer l'actionneur linéaire 212a d'une valeur égale à X/2. Ainsi, l'actionneur linéaire 212a reçoit une commande électrique de valeur X/2, et une commande mécanique de valeur X/2, l'actionneur linéaire 212a se déplace donc d'une valeur X et permet de déplacer, via la deuxième liaison mécanique 40a, le servo actionneur hydraulique 30a selon une valeur X.

En particulier, le moteur de la deuxième voie 211bb du système mécanique 211b reçoit une commande en position dont la valeur est égale à X/2, permettant à l'actionneur rotatif 211b de se déplacer d'une valeur égale à X/2 et de mettre en mouvement l'actionneur linéaire 212b grâce à la première liaison mécanique 231b. De plus, le moteur de la troisième voie 212bc reçoit, simultanément à la réception de la commande par le moteur de la deuxième voie 211bb, une commande en position dont la valeur est égale à X/2, permettant de déplacer l'actionneur linéaire 212b d'une valeur égale à X/2. Ainsi, l'actionneur linéaire 212b reçoit une commande électrique de valeur X/2, et une commande mécanique de valeur X/2, l'actionneur linéaire 212b se déplace donc d'une valeur X et permet de déplacer, via la deuxième liaison mécanique 40b, le servo actionneur hydraulique 30b selon une valeur X.

En particulier, le moteur de la deuxième voie 211cb du système mécanique 211c reçoit une commande en position dont la valeur est égale à X/2, permettant à l'actionneur rotatif 211c de se déplacer d'une valeur égale à X/2 et de mettre en mouvement l'actionneur linéaire 212c grâce à la première liaison mécanique 231c. De plus, le moteur de la troisième voie 212cc reçoit, simultanément à la réception de la commande par le moteur de la deuxième voie 211cb, une commande en position dont la valeur est égale à X/2, permettant de déplacer l'actionneur linéaire 212c d'une valeur égale à X/2. Ainsi, l'actionneur linéaire 212c reçoit une commande électrique de valeur X/2, et une commande mécanique de valeur X/2, l'actionneur linéaire 212c se déplace donc d'une valeur X et permet de déplacer, via la deuxième liaison mécanique 40c, le servo actionneur hydraulique 30c selon une valeur X.

En particulier, le moteur de la deuxième voie 211db du système mécanique 211d reçoit une commande en position dont la valeur est égale à X/2, permettant à l'actionneur rotatif 211d de se déplacer d'une valeur égale à X/2 et de mettre en mouvement l'actionneur linéaire 212d grâce à la première liaison mécanique 231d. De plus, le moteur de la troisième voie 212dc reçoit, simultanément à la réception de la commande par le moteur de la deuxième voie 211db, une commande en position dont la valeur est égale à X/2, permettant de déplacer l'actionneur linéaire 212d d'une valeur égale à X/2. Ainsi, l'actionneur linéaire 212d reçoit une commande électrique de valeur X/2, et une commande mécanique de valeur X/2, l'actionneur linéaire 212d se déplace donc d'une valeur X et permet de déplacer, via la deuxième liaison mécanique 40d, le servo actionneur hydraulique 30d selon une valeur X.

X peut être une valeur en millimètres comprise dans l'intervalle [-35mm, 35mm].

La [Fig. 7] représente l'ensemble de commande 1, lorsque le système selon l'invention fonctionne selon un mode dit de panne du troisième dispositif de commande 223.

Selon le mode de fonctionnement dit de panne du troisième dispositif de commande 223, le premier dispositif de commande 221 est dans un état de validité opérationnel, le deuxième dispositif 222 de commande est dans un état de validité de veille et le troisième dispositif de commande 223 est dans un état de validité défectueux.

Par exemple, lorsque le mode de fonctionnement du système de transmission 20 selon l'invention est dit nominal, afin de déplacer chaque servo actionneur hydraulique d'une valeur égale à X, le module de contrôle envoie N commandes, chaque commande parmi les N commandes comprend une valeur égale à X au premier dispositif de commande 221 opérationnel.

En particulier, le moteur de la première voie 211a reçoit une commande en position dont la valeur est égale à X, permettant à l'actionneur rotatif 211a de se déplacer d'une valeur égale à X et de mettre en mouvement l'actionneur linéaire 212a grâce à la première liaison mécanique. Dans ce mode de fonctionnement, l'actionneur linéaire 212a reçoit uniquement une commande en position mécanique, égale à X. L'actionneur linéaire 212a se déplace donc d'une valeur X et permet de déplacer, via la deuxième liaison mécanique 40a, le servo actionneur hydraulique 30a selon une valeur X.

En particulier, le moteur de la première voie 211b reçoit une commande en position dont la valeur est égale à X, permettant à l'actionneur rotatif 211b de se déplacer d'une valeur égale à X et de mettre en mouvement l'actionneur linéaire 212b grâce à la première liaison mécanique. Dans ce mode de fonctionnement, l'actionneur linéaire 212b reçoit uniquement une commande en position mécanique, égale à X. L'actionneur linéaire 212b se déplace donc d'une valeur X et permet de déplacer, via la deuxième liaison mécanique 40b, le servo actionneur hydraulique 30b selon une valeur X.

En particulier, le moteur de la première voie 211c reçoit une commande en position dont la valeur est égale à X, permettant à l'actionneur rotatif 211c de se déplacer d'une valeur égale à X et de mettre en mouvement l'actionneur linéaire 212c grâce à la première liaison mécanique. Dans ce mode de fonctionnement, l'actionneur linéaire 212c reçoit uniquement une commande en position mécanique, égale à X. L'actionneur linéaire 212c se déplace donc d'une valeur X et permet de déplacer, via la deuxième liaison mécanique 40c, le servo actionneur hydraulique 30c selon une valeur X.

En particulier, le moteur de la première voie 211d reçoit une commande en position dont la valeur est égale à X, permettant à l'actionneur rotatif 211d de se déplacer d'une valeur égale à X et de mettre en mouvement l'actionneur linéaire 212d grâce à la première liaison mécanique. Dans ce mode de fonctionnement, l'actionneur linéaire 212d reçoit uniquement une commande en position mécanique, égale à X. L'actionneur linéaire 212d se déplace donc d'une valeur X et permet de déplacer, via la deuxième liaison mécanique 40a, le servo actionneur hydraulique 30d selon une valeur X.

X peut être une valeur en millimètres comprise dans l'intervalle [-35mm, 35mm].

## Revendications

1. Système de transmission de commande (20) à N servo actionneurs hydrauliques (30a, 30b, 30c et 30d), N étant un entier supérieur ou égal à 2, le système comportant :
- N systèmes mécaniques (21a, 21b, 21c, 21d), chaque système mécanique (21a, 21b, 21c et 21d) comprenant :
∘ un actionneur électrique rotatif (211a, 211b, 211c, 211d) comportant une première voie (211aa, 211ba, 211ca, 211da) comprenant un moteur, et une deuxième voie (211ab, 211bb, 211cb, 211db) comportant un moteur;
∘ un actionneur électrique linéaire (212a, 212b, 212c et 212d) comportant une troisième voie (212aa, 212ba, 212ca, 212da) comportant un moteur, l'actionneur électrique linéaire (212a, 212b, 212c et 212d) étant relié à l'actionneur électrique rotatif (211a, 211b, 211c, 211d) par une première liaison mécanique (213a, 213b, 213c, 213d) et étant adapté pour être relié à un unique servo actionneur hydraulique parmi les N servo actionneurs hydrauliques (30a, 30b, 30c et 30d) par une deuxième liaison mécanique (40a, 40b, 40c et 40d);
- Un système de commande (22) comprenant :
∘ un premier dispositif de commande (221) relié par une liaison électrique à la première voie (211aa, 211ba, 211ca, 211da) de l'actionneur électrique rotatif (211a, 211b, 211c, 211d) de chaque système mécanique parmi les N systèmes mécaniques (21a, 21b, 21c, 21d);
∘ un deuxième dispositif de commande (222) relié par une liaison électrique à la deuxième voie (211ab, 211bb, 211cb, 211db) de l'actionneur électrique rotatif (211a, 211b, 211c, 211d) de chaque système mécanique parmi les N systèmes mécaniques (21a, 21b, 21c, 21d),
∘ un troisième dispositif de commande (223) relié par une liaison électrique à la troisième voie (212aa, 212ba, 212ca, 212da) de l'actionneur électrique linéaire de chaque système mécanique parmi les N systèmes mécaniques (21a, 21b, 21c, 21d).

2. Système de transmission de commande (20) selon la revendication 1 **caractérisé en ce que** N est égal à 4.

3. Système de transmission de commande (20) selon l'une des revendications 1 à 2 **caractérisé en ce que** le système de commande (22) est configuré pour fonctionner selon un mode dit de fonctionnement nominal selon lequel :
∘ le premier dispositif de commande (221) est dans un état de validité opérationnel, et est configuré pour :
a. recevoir une donnée par la première voie (211aa, 211ba, 211ca, 211da) de chaque système mécanique parmi les N systèmes mécaniques, la donnée concernant des paramètres de fonctionnement de ladite première voie de chaque système mécanique parmi les N systèmes mécaniques (21a, 21b, 21c, 21d) ;
b. émettre vers un module de contrôle la donnée reçue par la première voie (211aa, 211ba, 211ca, 211da) de chaque système mécanique parmi les N systèmes mécaniques (21a, 21b, 21c, 21d);
c. recevoir une commande émise par le module de contrôle à destination du moteur de la première voie (211aa, 211ba, 211ca, 211da) de chaque système mécanique parmi les N systèmes mécaniques (21a, 21b, 21c, 21d);
d. émettre la commande vers le moteur de la première voie (211aa, 211ba, 211ca, 211da) de chaque système mécanique parmi les N systèmes mécaniques (21a, 21b, 21c, 21d);
∘ le deuxième dispositif de commande (222) est dans un état de validité en veille et est configuré pour :
a. recevoir une donnée par la deuxième voie (211ab, 211bb, 211cb, 211db) de chaque système mécanique parmi les N systèmes mécaniques, la donnée concernant des paramètres de fonctionnement de ladite deuxième voie (211ab, 211bb, 211cb, 211db) de chaque système mécanique parmi les N systèmes mécaniques (21a, 21b, 21c, 21d) ;
b. émettre vers le module de contrôle la donnée reçue par la deuxième voie (211ab, 211bb, 211cb, 211db) de chaque système mécanique parmi les N systèmes mécaniques (21a, 21b, 21c, 21d) ;
∘ le troisième dispositif de commande (223) est dans un état de validité opérationnel et est configuré pour :
a. recevoir une donnée par la troisième voie (212aa, 212ba, 212ca, 212da) de chaque système mécanique parmi les N systèmes mécaniques, une donnée concernant des paramètres de fonctionnement de ladite troisième voie de chaque système mécanique parmi les N systèmes mécaniques (21a, 21b, 21c, 21d);
b. émettre vers le module de contrôle chaque donnée reçue par la troisième voie (212aa, 212ba, 212ca, 212da) de chaque système mécanique parmi les N systèmes mécaniques;
c. recevoir une commande émise par le module de contrôle à destination du moteur de la troisième voie (212aa, 212ba, 212ca, 212da) de chaque système mécanique parmi les N systèmes mécaniques (21a, 21b, 21c, 21d), simultanément à l'étape de la réception de la commande par le premier dispositif de commande (221),
d. émettre chaque commande reçue vers le moteur de la troisième voie (212aa, 212ba, 212ca, 212da) de chaque système mécanique ;

4. Système de transmission de commande (20) selon l'une des revendications 1 à 2 **caractérisé en ce que** le système de commande (22) est configuré pour fonctionner selon un mode dit de panne du premier dispositif de commande (221) selon lequel :
∘ le premier dispositif de commande (221) est dans un état de validité hors fonctionnement,
∘ le deuxième dispositif de commande (222) est configuré pour passer d'un état de validité en veille à un état de validité opérationnel, le changement d'état du deuxième dispositif de commande (222) résultant de l'état de validité hors fonctionnement du premier dispositif de commande (221), et est configuré pour :
a. recevoir une donnée par la première voie (211aa, 211ba, 211ca, 211da) de chaque système mécanique parmi les N systèmes mécaniques, la donnée concernant des paramètres de fonctionnement de ladite première voie de chaque système mécanique parmi les N systèmes mécaniques;
b. émettre vers le module de contrôle la donnée reçue par la première voie (211aa, 211ba, 211ca, 211da) de chaque système mécanique parmi les N systèmes mécaniques ;
c. recevoir par le module de contrôle une commande à émettre vers le moteur de la deuxième voie (211ab, 211bb, 211cb, 211db) de chaque système mécanique parmi les N systèmes mécaniques (21a, 21b, 21c, 21d);
d. émettre la commande vers le moteur de la deuxième voie de chaque système mécanique parmi les N systèmes mécaniques (21a, 21b, 21c, 21d);
∘ le troisième dispositif de commande (223) est dans un état de validité opérationnel et est configuré pour :
a. recevoir une donnée par la troisième voie (211ac, 211bc, 211cc, 211dc) de chaque système mécanique parmi les N systèmes mécaniques, la deuxième donnée concernant des paramètre de fonctionnement de ladite troisième voie de chaque système mécanique parmi les N systèmes mécaniques (21a, 21b, 21c, 21d);
b. émettre vers le module de contrôle la donnée reçue par la troisième voie (211ac, 211bc, 211cc, 211dc) de chaque système mécanique parmi les N systèmes mécaniques (21a, 21b, 21c, 21d);
c. recevoir par le module de contrôle, simultanément à la réception de chaque commande par le deuxième dispositif de commande (222), une commande à émettre vers le moteur de la troisième voie (211ac, 211bc, 211cc, 211dc) de chaque système mécanique parmi les N systèmes mécaniques (21a, 21b, 21c, 21d);
d. émettre la commande vers le moteur de la troisième voie (211ac, 211bc, 211cc, 211dc) de chaque système mécanique parmi les N systèmes mécaniques (21a, 21b, 21c, 21d);

5. Système de transmission de commande (20) selon l'une des revendications 1 à 2 **caractérisé en ce que** le système de commande (22) est configuré pour fonctionner selon un mode dit de panne du troisième dispositif (213) de commande selon lequel :
∘ le premier dispositif de commande (221) est dans un état de validité opérationnel, et est configuré pour :
a. recevoir une donnée par la première voie (211aa, 211ba, 211ca, 211da) de chaque système mécanique parmi les N systèmes mécaniques (21a, 21b, 21c, 21d), la donnée concernant des paramètre de fonctionnement de ladite première voie ;
b. émettre vers le module de contrôle la donnée reçue par la première voie (211aa, 211ba, 211ca, 211da) de chaque système mécanique parmi les N systèmes mécaniques ;
c. recevoir par le module de contrôle au moins une commande à émettre vers le moteur de la première voie (211aa, 211ba, 211ca, 211da) de chaque système mécanique parmi les N systèmes mécaniques;
d. émettre la commande vers le moteur de la première voie (211aa, 211ba, 211ca, 211da) de chaque système mécanique parmi les N systèmes mécaniques (21a, 21b, 21c, 21d);
∘ le deuxième dispositif de commande (222) est dans un état de validité en veille et est configuré pour :
a. recevoir au moins une donnée par la deuxième voie, la donnée concernant des paramètre de fonctionnement de ladite deuxième voie ;
b. émettre vers le module de contrôle la donnée reçue par la deuxième voie de chaque système mécanique parmi les N systèmes mécaniques (21a, 21b, 21c, 21d);
∘ le troisième dispositif de commande (223) est dans un état hors fonctionnement ;

6. Système de transmission de commande (20) selon l'une des revendications 3 à 5 selon lequel, pour chaque mode de fonctionnement, la somme de la commande reçue respectivement par le moteur de la première voie (211aa, 211ba, 211ca, 211da) ou le moteur de la deuxième voie (211ab, 211bb, 211cb, 211db) et/ou le moteur de la troisième voie (212aa, 212ba, 212ca, 212da) de chaque système mécanique parmi les N systèmes mécaniques assure la commande mécanique du servo actionneur hydraulique relié audit système mécanique .

7. Système de transmission de commande (20) selon l'une des revendications 3 à 6 selon lequel, pour chaque système mécanique parmi les N systèmes mécaniques :
- la première voie (211aa, 211ba, 211ca, 211da) comprend un capteur de position moteur et un capteur de position rotatif ;
- La deuxième voie (211ab, 211bb, 211cb, 211db) comprend un capteur de position moteur et un capteur de position rotatif ;
- la troisième voie comprend un troisième capteur de position moteur et un capteur de position linéaire ;
et selon lequel une donnée reçue par une voie parmi la première, deuxième et troisième voie concernant les paramètres de fonctionnement de cette voie comprend :
- une donnée concernant la position du moteur compris dans la voie et/ou
- une donnée concernant la position de l'actionneur dans lequel est comprise ladite voie.

8. Système de transmission de commande (20) selon l'une des revendications 2 à 7 selon lequel une commande émise par le module de contrôle vers un dispositif de commande (221, 222, 223) comprend une consigne de position destinée au moteur compris dans chaque voie reliée au dit dispositif de commande (221, 222, 223).

9. Système de transmission de commande (20) selon l'une des revendications précédentes selon lequel l'actionneur rotatif de chaque système mécanique parmi les N systèmes mécaniques (21a, 21b, 21c, 21d) est irréversible.

10. Système de transmission de commande (20) selon l'une des revendications précédentes selon lequel l'actionneur linéaire de chaque système mécanique parmi les N systèmes mécaniques (21a, 21b, 21c, 21d) est irréversible.

11. Système de transmission de commande (20) selon l'une des revendications précédentes **caractérisé en ce que**, pour chaque système mécanique parmi les N systèmes mécaniques (21a, 21b, 21c, 21d), la première liaison mécanique et la deuxième liaison mécanique sont en série.

12. Ensemble de commande (1) de N servo actionneurs hydrauliques **caractérisé en ce qu'**il comprend :
- un module de contrôle (10) ;
- un système de transmission de commande (20) selon l'une des revendications 1 à 11 ;
- N servo actionneurs hydrauliques (30a, 30b, 30c et 30d) .

13. Aéronef comprenant un ensemble de commande (1) selon la revendication précédente.

## Patentansprüche

1. Steuerungsübertragungssystem (20) mit N hydraulischen Servoantrieben (30a, 30b, 30c und 30d), wobei N eine ganze Zahl größer oder gleich 2 ist und das System umfasst:
- N mechanische Systeme (21a, 21b, 21c, 21d), wobei jedes mechanische System (21a, 21b, 21c und 21d) umfasst:
∘ einen elektrischen Drehantrieb (211a, 211b, 211c, 211d) mit einem ersten Kanal (211aa, 211ba, 211ca, 211da), der einen Motor umfasst, und einem zweiten Kanal (211ab, 211bb, 211cb, 211db), der einen Motor umfasst;
∘ einen elektrischen Linearantrieb (212a, 212b, 212c und 212d) mit einem dritten Kanal (212aa, 212ba, 212ca, 212da), der einen Motor umfasst, wobei der elektrische Linearantrieb (212a, 212b, 212c und 212d) über eine erste mechanische Verbindung (213a, 213b, 213c, 213d) mit dem elektrischen Drehantrieb (211a, 211b, 211c, 211d) verbunden ist und dazu ausgelegt ist, über eine zweite mechanische Verbindung (40a, 40b, 40c und 40d) mit einem einzigen der N hydraulischen Servoantriebe (30a, 30b, 30c und 30d) verbunden zu werden;
- Ein Steuersystem (22), umfassend:
∘ eine erste Steuervorrichtung (221), die über eine elektrische Verbindung mit dem ersten Kanal (211aa, 211ba, 211ca, 211da) des elektrischen Drehantriebs (211a, 211b, 211c, 211d) jedes der N mechanischen Systeme (21a, 21b, 21c, 21d) verbunden ist;
∘ eine zweite Steuervorrichtung (222), die über eine elektrische Verbindung mit dem zweiten Kanal (211ab, 211bb, 211cb, 211db) des elektrischen Drehantriebs (211a, 211b, 211c, 211d) jedes der N mechanischen Systeme (21a, 21b, 21c, 21d) verbunden ist,
∘ eine dritte Steuervorrichtung (223), die über eine elektrische Verbindung mit dem dritten Kanal (212aa, 212ba, 212ca, 212da) des elektrischen Linearantriebs jedes der N mechanischen Systeme (21a, 21b, 21c, 21d) verbunden ist.

2. Steuerungsübertragungssystem (20) nach Anspruch 1, **dadurch gekennzeichnet, dass** N gleich 4 ist.

3. Steuerungsübertragungssystem (20) nach einem der Ansprüche 1 bis 2, **dadurch gekennzeichnet, dass** das Steuerungssystem (22) so ausgelegt ist, dass es in einem sogenannten Nennbetriebsmodus arbeitet, in dem:
∘ sich die erste Steuervorrichtung (221) in einem betriebsbereiten Zustand befindet und so ausgelegt ist, dass sie:
a. über den ersten Kanal (211aa, 211ba, 211ca, 211da) jedes der N mechanischen Systeme Daten empfängt, wobei sich die Daten auf Betriebsparameter des ersten Kanals jedes der N mechanischen Systeme (21a, 21b, 21c, 21d) beziehen;
b. die über den ersten Kanal (211aa, 211ba, 211ca, 211da) jedes der N mechanischen Systeme (21a, 21b, 21c, 21d) empfangenen Daten an ein Steuermodul sendet;
c. einen vom Steuermodul gesendeten Befehl empfängt, der für den Motor des ersten Kanals (211aa, 211ba, 211ca, 211da) jedes der N mechanischen Systeme (21a, 21b, 21c, 21d) bestimmt ist;
d. den Befehl an den Motor des ersten Kanals (211aa, 211ba, 211ca, 211da) jedes der N mechanischen Systeme (21a, 21b, 21c, 21d) sendet;
∘ sich die zweite Steuervorrichtung (222) in einem Standby-Zustand befindet und so ausgelegt ist, dass sie:
a. über den zweiten Kanal (211ab, 211bb, 211cb, 211db) jedes der N mechanischen Systeme Daten empfängt, wobei sich die Daten auf Betriebsparameter des zweiten Kanals (211ab, 211bb, 211cb, 211db) jedes der N mechanischen Systeme (21a, 21b, 21c, 21d) beziehen;
b. die über den zweiten Kanal (211ab, 211bb, 211cb, 211db) jedes der N mechanischen Systeme (21a, 21b, 21c, 21d) empfangenen Daten an das Steuermodul sendet;
∘ sich die dritte Steuervorrichtung (223) in einem betriebsbereiten Zustand befindet und so ausgelegt ist, dass sie:
a. über den dritten Kanal (212aa, 212ba, 212ca, 212da) von jedem der N mechanischen Systeme Daten empfängt, wobei es sich um Daten handelt, die Betriebsparameter des dritten Kanals jedes der N mechanischen Systeme (21a, 21b, 21c, 21d) betreffen;
b. alle über den dritten Kanal (212aa, 212ba, 212ca, 212da) von jedem der N mechanischen Systeme empfangenen Daten an das Steuermodul sendet;
c. einen vom Steuermodul gesendeten Befehl empfängt, der für den Motor des dritten Kanals (212aa, 212ba, 212ca, 212da) jedes der N mechanischen Systeme (21a, 21b, 21c, 21d) bestimmt ist, gleichzeitig mit dem Schritt des Empfangs des Befehls durch die erste Steuervorrichtung (221),
d. jeden empfangenen Befehl an den Motor des dritten Kanals (212aa, 212ba, 212ca, 212da) jedes mechanischen Systems sendet;

4. Steuerungsübertragungssystem (20) nach einem der Ansprüche 1 bis 2, **dadurch gekennzeichnet, dass** das Steuersystem (22) so ausgelegt ist, dass es in einem sogenannten Ausfallmodus der ersten Steuervorrichtung (221) arbeitet, in dem:
∘ sich die erste Steuervorrichtung (221) in einem Außer-Betriebs-Zustand befindet,
∘ die zweite Steuervorrichtung (222) so ausgelegt ist, dass sie von einem Standby-Zustand in einen Betriebs-Zustand wechselt, wobei der Zustandswechsel der zweiten Steuervorrichtung (222) aus dem Außer-Betriebs-Zustand der ersten Steuervorrichtung (221) resultiert, und so ausgelegt ist, dass sie:
a. über den ersten Kanal (211aa, 211ba, 211ca, 211da) Daten jedes der N mechanischen Systeme empfängt, wobei sich die Daten auf Betriebsparameter des ersten Kanals jedes der N mechanischen Systeme beziehen;
b. die über den ersten Kanal (211aa, 211ba, 211ca, 211da) jedes der N mechanischen Systeme empfangenen Daten an das Steuermodul sendet;
c. über das Steuermodul einen Befehl empfängt, der an den Motor des zweiten Kanals (211ab, 211bb, 211cb, 211db) jedes der N mechanischen Systeme (21a, 21b, 21c, 21d) gesendet werden soll;
d. den Befehl an den Motor des zweiten Kanals jedes der N mechanischen Systeme (21a, 21b, 21c, 21d) sendet;
∘ die dritte Steuervorrichtung (223) sich in einem Betriebs-Zustand befindet und so ausgelegt ist, dass sie:
a. über den dritten Kanal (211ac, 211bc, 211cc, 211dc) Daten jedes der N mechanischen Systeme empfängt, wobei die zweiten Daten Betriebsparameter des dritten Kanals jedes der N mechanischen Systeme (21a, 21b, 21c, 21d) betreffen;
b. die über den dritten Kanal (211ac, 211bc, 211cc, 211dc) jedes der N mechanischen Systeme (21a, 21b, 21c, 21d) empfangenen Daten an das Steuermodul sendet;
c. vom Steuermodul gleichzeitig mit dem Empfang jedes Befehls durch die zweite Steuervorrichtung (222) einen Befehl empfängt, der an den Motor des dritten Kanals (211ac, 211bc, 211cc, 211dc) jedes der N mechanischen Systeme (21a, 21b, 21c, 21d) zu senden ist;
d. den Befehl an den Motor des dritten Kanals (211ac, 211bc, 211cc, 211dc) jedes der N mechanischen Systeme (21a, 21b, 21c, 21d) sendet.

5. Steuerungsübertragungssystem (20) nach einem der Ansprüche 1 bis 2, **dadurch gekennzeichnet, dass** das Steuerungssystem (22) so ausgelegt ist, dass es in einem sogenannten Ausfallmodus der dritten Steuervorrichtung (213) arbeitet, bei dem:
∘ die erste Steuervorrichtung (221) sich in einem Betriebs-Zustand befindet und so ausgelegt ist, dass sie
a. Daten über den ersten Kanal (211aa, 211ba, 211ca, 211da) von jedem der N mechanischen Systeme (21a, 21b, 21c, 21d) empfängt, wobei sich die Daten auf Betriebsparameter des ersten Kanals beziehen;
b. die über den ersten Kanal (211aa, 211ba, 211ca, 211da) jedes der N mechanischen Systeme empfangenen Daten an das Steuermodul sendet;
c. vom Steuermodul mindestens einen Befehl empfängt, der an den Motor des ersten Kanals (211aa, 211ba, 211ca, 211da) jedes der N mechanischen Systeme zu senden ist;
d. den Befehl an den Motor des ersten Kanals (211aa, 211ba, 211ca, 211da) jedes der N mechanischen Systeme (21a, 21b, 21c, 21d) sendet;
∘ die zweite Steuervorrichtung (222) sich in einem Standby-Zustand befindet und so ausgelegt ist, dass sie:
a. mindestens einen Datenwert über den zweiten Kanal empfängt, wobei der Datenwert Betriebsparameter des zweiten Kanals betrifft;
b. die über den zweiten Kanal empfangenen Daten jedes der N mechanischen Systeme (21a, 21b, 21c, 21d) an das Steuermodul sendet;
o die dritte Steuervorrichtung (223) sich in einem Außer-Betriebs-Zustand befindet;

6. Steuerungsübertragungssystem (20) nach einem der Ansprüche 3 bis 5, bei dem für jeden Betriebsmodus die Summe der jeweils vom Motor des ersten Kanals (211aa, 211ba, 211ca, 211da) oder vom Motor des zweiten Kanals (211ab, 211bb, 211cb, 211db) und/oder vom Motor des dritten Kanals (212aa, 212ba, 212ca, 212da) jedes der N mechanischen Systeme die mechanische Steuerung des mit dem mechanischen System verbundenen hydraulischen Servoantriebs gewährleistet.

7. Steuerungsübertragungssystem (20) nach einem der Ansprüche 3 bis 6, bei dem für jedes der N mechanischen Systeme:
- der erste Kanal (211aa, 211ba, 211ca, 211da) einen Motorpositionssensor und einen Drehpositionssensor umfasst;
- der zweite Kanal (211ab, 211bb, 211cb, 211db) einen Motorpositionssensor und einen Drehpositionssensor umfasst;
- der dritte Kanal einen dritten Motorpositionssensor und einen linearen Positionssensor umfasst;
und bei dem Daten, die von einem der ersten, zweiten und dritten Kanäle bezüglich der Betriebsparameter dieses Kanals empfangen werden, Folgendes umfassen:
- Daten bezüglich der Position des in dem Kanal enthaltenen Motors und/oder
- Daten bezüglich der Position des Stellantriebs, in dem dieser Kanal enthalten ist.

8. Steuerungsübertragungssystem (20) nach einem der Ansprüche 2 bis 7, bei dem ein vom Steuermodul an eine Steuervorrichtung (221, 222, 223) gesendeter Befehl einen Positionssollwert für den Motor umfasst, der in jedem mit dieser Steuervorrichtung (221, 222, 223) verbundenen Kanal enthalten ist.

9. Steuerungsübertragungssystem (20) nach einem der vorstehenden Ansprüche, bei dem der Drehantrieb jedes der N mechanischen Systeme (21a, 21b, 21c, 21d) irreversibel ist.

10. Steuerungsübertragungssystem (20) nach einem der vorstehenden Ansprüche, bei dem der Linearantrieb jedes der N mechanischen Systeme (21a, 21b, 21c, 21d) irreversibel ist.

11. Steuerungsübertragungssystem (20) nach einem der vorstehenden Ansprüche, **dadurch gekennzeichnet, dass** für jedes der N mechanischen Systeme (21a, 21b, 21c, 21d) die erste mechanische Verbindung und die zweite mechanische Verbindung in Reihe geschaltet sind.

12. Steuereinheit (1) für N hydraulische Servoantriebe, **dadurch gekennzeichnet, dass** sie umfasst:
- ein Steuermodul (10);
- ein Steuerungsübertragungssystem (20) nach einem der Ansprüche 1 bis 11;
- N hydraulische Servoantriebe (30a, 30b, 30c und 30d).

13. Luftfahrzeug, das eine Steuereinheit (1) nach dem vorstehenden Anspruch umfasst.

## Claims

1. A command transmission system (20) with N hydraulic servo-actuators (30a, 30b, 30c and 30d), N being an integer greater than or equal to 2, the system including:
- N mechanical systems (21a, 21b, 21c, 21d), each mechanical system (21a, 21b, 21c and 21d) comprising:
∘ a rotating electric actuator (211a, 211b, 211c, 211d) including a first path (211aa, 211ba, 211ca, 211da) including a motor, and a second path (211ab, 211bb, 211cb, 211db) including a motor;
∘ a linear electric actuator (212a, 212b, 212c and 212d) including a third path (212aa, 212ba, 212ca, 212da) including a motor, the linear electric actuator (212a, 212b, 212c and 212d) being linked to the rotating electric actuator (211a, 211b, 211c, 211d) by a first mechanical link (213a, 213b, 213c, 213d) and being adapted to be linked to a single hydraulic servo-actuator of the N hydraulic servo-actuators (30a, 30b, 30c and 30d) by a second mechanical link (40a, 40b, 40c and 40d);
- A command system (22) comprising:
∘ a first command device (221) linked by an electrical link to the first path (211aa, 211ba, 211ca, 211da) of the rotating electric actuator (211a, 211b, 211c, 211d) of each mechanical system among the N mechanical systems (21a, 21b, 21c, 21d);
∘ a second command device (222) linked by an electrical link to the second path (211ab, 211bb, 211cb, 211db) of the rotating electric actuator (211a, 211b, 211c, 211d) of each mechanical system among the N mechanical systems (21a, 21b, 21c, 21d),
∘ a third command device (223) linked by an electrical link to the third path (212aa, 212ba, 212ca, 212da) of the linear electric actuator of each mechanical system among the N mechanical systems (21a, 21b, 21c, 21d).

2. The command transmission system (20) according to claim 1, **characterised in that** N is equal to 4.

3. The command transmission system (20) according to one of claims 1 to 2, **characterised in that** the command system (22) is configured to operate according to a so-called nominal operating mode, wherein:
∘ the first command device (221) is in an operational state of validity, and is configured to:
a. receive a piece of data via the first path (211aa, 211ba, 211ca, 211da) of each mechanical system among the N mechanical systems, the piece of data relating to operating parameters of said first path of each mechanical system among the N mechanical systems (21a, 21b, 21c, 21d);
b. emit the piece of data received via the first path (211aa, 211ba, 211ca, 211da) of each mechanical system among the N mechanical systems (21a, 21b, 21c, 21d) to a control module;
c. receive a command emitted by the control module intended for the motor of the first path (211aa, 211ba, 211ca, 211da) of each mechanical system among the N mechanical systems (21a, 21b, 21c, 21d);
d. emit the command to the motor of the first path (211aa, 211ba, 211ca, 211da) of each mechanical system among the N mechanical systems (21a, 21b, 21c, 21d);
∘ the second command device (222) is in a standby state of validity and is configured to:
a. receive a piece of data via the second path (211ab, 211bb, 211cb, 211db) of each mechanical system among the N mechanical systems, a piece of data relating to operating parameters of said second path (211ab, 211bb, 211cb, 211db) of each mechanical system among the N mechanical systems (21a, 21b, 21c, 21d);
b. emit the piece of data received via the second path (211ab, 211bb, 211cb, 211db) of each mechanical system among the N mechanical systems (21a, 21b, 21c, 21d) to the control module;
∘ the third command device (223) is in an operational state of validity and is configured to:
a. receive a piece of data via the third path (212aa, 212ba, 212ca, 212da) of each mechanical system among the N mechanical systems, a piece data relating to operating parameters of said third path of each mechanical system among the N mechanical systems (21a, 21b, 21c, 21d);
b. emit each piece of data received via the third path (212aa, 212ba, 212ca, 212da) of each mechanical system among the N mechanical systems to the control module;
c. receive a command emitted by the control module intended for the motor of the third path (212aa, 212ba, 212ca, 212da) of each mechanical system among the N mechanical systems (21a, 21b, 21c, 21d), simultaneously with the step of receiving the command by the first command device (221),
d. emit each command received to the motor of the third path (212aa, 212ba, 212ca, 212da) of each mechanical system.

4. The command transmission system (20) according to one of claims 1 to 2, **characterised in that** the command system (22) is configured to operate according to a so-called failure mode of the first command device (221), wherein:
∘ the first command device (221) is in an out-of-operation state of validity,
∘ the second command device (222) is configured to change from a standby state of validity to an operational state of validity, the change of state of the second command device (222) resulting from the out-of-operation state of validity of the first command device (221), and is configured to:
a. receive a piece of data via the first path (211aa, 211ba, 211ca, 211da) of each mechanical system among the N mechanical systems, the piece of data relating to operating parameters of said first path of each mechanical system among the N mechanical systems;
b. emit the piece of data received via the first path (211aa, 211ba, 211ca, 211da) of each mechanical system among the N mechanical systems to the control module;
c. receive by the control module a command to emit to the motor of the second path (211ab, 211bb, 211cb, 211db) of each mechanical system among the N mechanical systems (21a, 21b, 21c, 21d);
d. emit the command to the motor of the second path of each mechanical system among the N mechanical systems (21a, 21b, 21c, 21d);
∘ the third command device (223) is in an operational state of validity and is configured to:
a. receive a piece of data via the third path (211ac, 211bc, 211cc, 211dc) of each mechanical system of the N mechanical systems, the second piece of data relating to operating parameters of said third path of each mechanical system of the N mechanical systems (21a, 21b, 21c, 21d);
b. emit to the control module the piece of data received via the third path (211ac, 211bc, 211cc, 211dc) of each mechanical system among the N mechanical systems (21a, 21b, 21c, 21d);
c. receive by the control module, simultaneously with receiving each command by the second command device (222), a command to be emitted to the motor of the third path (211ac, 211bc, 211cc, 211dc) of each mechanical system among the N mechanical systems (21a, 21b, 21c, 21d);
d. emit the command to the motor of the third path (211ac, 211bc, 211cc, 211dc) of each mechanical system among the N mechanical systems (21a, 21b, 21c, 21d).

5. The command transmission system (20) according to one of claims 1 to 2, **characterised in that** the command system (22) is configured to operate according to a so-called failure mode of the third command device (213) wherein:
∘ the first command device (221) is in an operational state of validity, and is configured to:
a. receive a piece of data via the first path (211aa, 211ba, 211ca, 211da) of each mechanical system of the N mechanical systems (21a, 21b, 21c, 21d), the piece of data relating to operating parameters of said first path;
b. emit the piece of data received via the first path (211aa, 211ba, 211ca, 211da) of each mechanical system among the N mechanical systems to the control module;
c. receive by the control module at least one command to be emitted to the motor of the first path (211aa, 211ba, 211ca, 211da) of each mechanical system among the N mechanical systems;
d. emit the command to the motor of the first path (211aa, 211ba, 211ca, 211da) of each mechanical system among the N mechanical systems (21a, 21b, 21c, 21d);
∘ the second command device (222) is in a standby state of validity and is configured to:
a. receive at least one piece of data via the second path, the piece of data relating to operating parameters of said second path;
b. emit the piece of data received via the second path of each mechanical system among the N mechanical systems (21a, 21b, 21c, 21d) to the control module;
∘ the third command device (223) is in an out-of-operation state.

6. The command transmission system (20) according to one of claims 3 to 5, wherein, for each operating mode, the sum of the command received respectively by the motor of the first path (211aa, 211ba, 211ca, 211da) or the motor of the second path (211ab, 211bb, 211cb, 211db) and/or the motor of the third path (212aa, 212ba, 212ca, 212da) of each mechanical system among the N mechanical systems provides mechanical command of the hydraulic servo-actuator linked to said mechanical system.

7. The command transmission system (20) according to one of claims 3 to 6 wherein, for each mechanical system among the N mechanical systems:
- the first path (211aa, 211ba, 211ca, 211da) comprises a motor position sensor and a rotating position sensor;
- The second path (211ab, 211bb, 211cb, 211db) comprises a motor position sensor and a rotating position sensor;
- the third path comprises a third motor position sensor and a linear position sensor;
and wherein a piece of data received via a path among the first, second and third paths relating to the operating parameters of that path comprises:
- a piece of data relating to the position of the motor included in the path and/or
- a piece of data relating to the position of the actuator in which said path is included.

8. The command transmission system (20) according to one of claims 2 to 7, wherein a command emitted by the control module to a command device (221, 222, 223) comprises a position instruction intended for the motor included in each path linked to said command device (221, 222, 223).

9. The command transmission system (20) according to one of the preceding claims wherein the rotating actuator of each mechanical system among the N mechanical systems (21a, 21b, 21c, 21d) is irreversible.

10. The command transmission system (20) according to one of the preceding claims, wherein the linear actuator of each mechanical system among the N mechanical systems (21a, 21b, 21c, 21d) is irreversible.

11. The command transmission system (20) according to one of the preceding claims, **characterised in that**, for each mechanical system of the N mechanical systems (21a, 21b, 21c, 21d), the first mechanical link and the second mechanical link are in series.

12. A command assembly (1) for N hydraulic servo-actuators, **characterised in that** it comprises:
- a control module (10);
- a command transmission system (20) according to one of claims 1 to 11;
- N hydraulic servo-actuators (30a, 30b, 30c and 30d).

13. An aircraft comprising a command assembly (1) according to the preceding claim.
